# EUROPEAN PATENT SPECIFICATION

(11) **EP 1 035 729 B1**
(45) Date of publication and mention of the grant of the patent: **18.02.2004**
(21) Application number: 00301909.8
(22) Date of filing: 08.03.2000
(51) Int. Cl.: H04N 1/48, H04N 9/04

(54) **Image capturing method and image capturing device**
Bildaufnahmeverfahren und Bildaufnahmevorrichtung
Méthode et dispositif de capture d'image

(30) Priority: 08.03.1999 US 263931; 10.05.1999 US 309089
(43) Date of publication of application: 13.09.2000
(73) Proprietor: SHARP KABUSHIKI KAISHA, Osaka 545-8522 (JP)
(72) Inventor: Feng, Xiao-fan, Vancouver, Washington 98683 (US); Daly, Scott J., Kalama, Washington 98625 (US)
(74) Representative: Brown, Kenneth Richard

(56) References cited:
- US-A- 4 663 661
- US-A- 4 896 207
- US-A- 5 119 180
- US-A- 5 379 069
- US-A- 5 579 047
- US-A- 5 734 424
- US-A- 5 737 017

## Description

### FIELD OF THE INVENTION

The present invention relates to an image capturing method and an image capturing device for an electrophotographic printing machine, a scanner, a facsimile or the like.

### BACKGROUND OF THE INVENTION

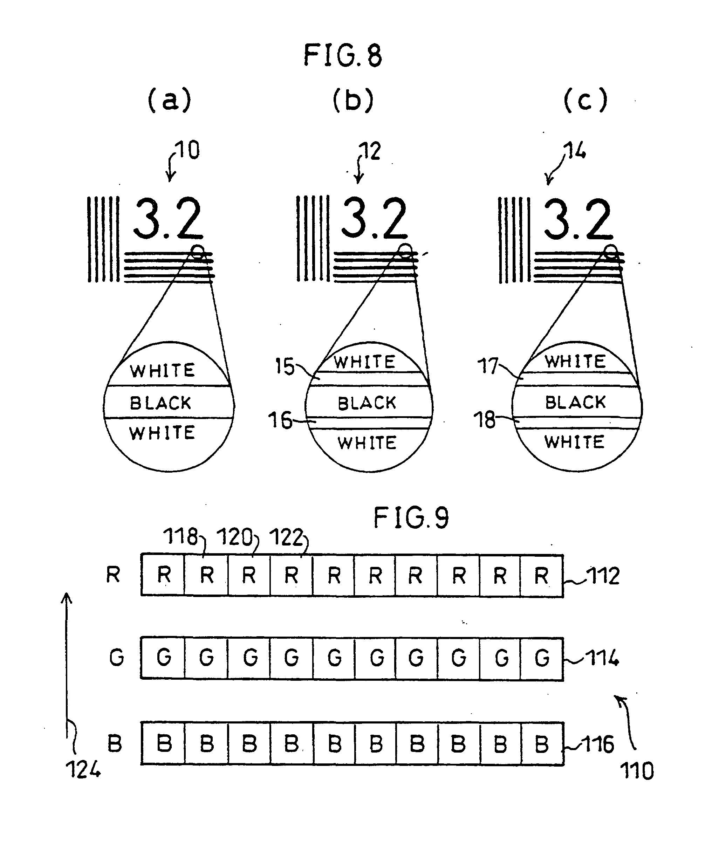

Prior art scanners generally employ a red-green-blue (RGB) sensor array to capture an image as shown in Fig. 9, generally at 110. Each array has three channels, including a red channel 112, a green channel 114 and a blue channel 116. All three channels have the same number of detectors, sensors, or elements such as sensors 118, 120 and 122. The three RGB sensors typically have the same number of sensors which are aligned in the slow scan direction, indicated by arrow 124 in Fig. 9. The three channels each generate a signal, which signals are combined to form a color image. This approach does not take advantage of the human vision system (HVS), wherein the bandwidth for chrominance signals is significantly lower than that of the luminance signal. A full resolution RGB scanner captures redundant information. In fact, the first step of many image processing algorithms is to remove this redundancy by converting the RGB signal to luminance-chrominance-chrominance (LCC), and sub-sampling the chrominance channels reduce this redundancy as by JPEG compression, or other well known techniques as used in color television or copiers.

Most commercially available scanners capture color images using three sensors: red (R), green (G), and blue (B). For most desktop scanners, this is accomplished with a 3-row CCD sensor, wherein each sensor row has a number of sensors therein. Each row is offset in the slow scan direction, or sub-direction, i.e., the direction of scan bar movement, by a few scanlines, and each row of sensors is responsible for capturing only one color. The captured data are recombined digitally to form a red-green-blue (RGB) image.

Because the 3 rows of the CCD are separated in the slow scan direction, the recombined RGB planes of the image do not align perfectly. This misalignment in color channels is referred to as a color mis-registration and it results in color fringes about black text, and reduced sharpness. In order to avoid these scanning artifacts, sophisticated algorithms and circuitry are needed to correct this color registration problem. For example, some systems have special hardware to segment the black text from others, and a special algorithm is employed to reduce the color fringe artifacts caused by color registration. This increases the number of gates required in the image processing ASIC (Application Specific IC), and thus increases the cost of the system.

There are many other approaches to reduce color mis-registration in the patent literature. Some employ mechanical or optical means to reduce the amount of color mis-registration. Some employ software algorithms to detect the color registration error and correct it in software.

Color registration has always been a problem in color image capture, both for color scanners and for color cameras. Because the sensitivity and spatial bandwidth of human vision for luminance is much higher than that for chrominance, it is intuitive to devise some scheme to capture luminance and chrominance separately. R.W.G. Hunt described the concept of a red, luminance, and blue (R-Y-B) camera in *The Reproduction of Color,* Fifth Edition, Fountain Press, 1995. Light from the objective lens is split into three beams: red (R), luminance (Y), and blue (B). Three plumbicon tubes are used to capture the R-Y-B image. The advantage, in terms of color registration, is not found, in practice, to be as large as expected, because the human eye seems to be very sensitive to color fringes around edges in a picture. The main reason for the failure in the R-Y-B capture process as described by Hunt is that the chrominance signal is not captured independent of the luminance in Hunt's system. The chrominance signals are derived from red, blue, and luminance signals (R-Y, and Y-B), which are shifted relative to each other. Mis-registration in R and Y or B and Y produces a sharp change at edges, which causes color fringing.

Referring now to Fig. 8, several simulated images formed by a color scanner are depicted. Fig. 8(a) depicts an original image at 10; Fig. 8(b) represents an image formed by a 2-pixel vertical shift in the red component in a RGB image at 12; while Fig. 8(c) represents an image representing a 2-pixel vertical shift in an RYB image at 14. Figs. 8(b) and 8(c) have color fringes located above and below the black portion of the image, with an upper fringe 15 of Fig. 8(b) being a cyan artifact, and a lower fringe 16 being a red artifact. In Fig. 8(c), an upper fringe 17 is a green artifact while a lower fringe 18 is a red artifact. It is apparent that although the R-Y-B scanner improves the sharpness of text, the color fringing still exists.

There is substantial prior art addressing the problem of color mis-registration for both image input and image output devices. The known prior art the input devices addresses the capture of still images, typically, hard copy scanners and electrophotographic engines, and moving images in video camera applications. Of the still imaging techniques, there are those that are strictly mechanical, such as described in U.S. Patent No. 5,737,003, which detects the belt position of an electrophotographic process and adjusts it to prevent color mis-registration. There are also techniques which mechanically detect components of the system that would cause mis-registration, but rather than correcting the mechanical problem, the correction is applied to another component of the imaging process, as described in U.S. Patent No. 5,412,409. One of the more common techniques is to use a registration pattern, as described in U.S. Patent Nos. 5,775,156 and 5,760,815, both of which describe the use of fiber optics to image a pattern onto the sensor.

Once the registration pattern is detected and analyzed by color components, attempts are made to correct the mis-registration problem, via mechanical adjustment, as described in U.S. Patent Nos. 5,410,347 and 5,325,154, or by adjusting the digital image, as described in U.S. Patent Nos. 5,550,625 and 5,523,823. Sometimes a color registration error is detected without using registration patterns, such as by using an image border, as described in U.S. Patent No. 5,406,066.

Other color registration techniques are used in connection with video cameras, and include those that correct for mis-registration due to chroma aberration by modifying scanning beam deflection circuitry. Such as U.S. Patent No. 5,715,498 and those that correct for registration problems due to tube geometry and optics, such as U.S. Patent No. 4,733,296. A technique that corrects for the color mis-registration caused by color filter wheel imperfections in a system using RGB line sequential color uses a line scan offset method is described in U.S. Patent No. 5,084,761. A technique that uses an alignment beam for sensing color mis-registration and correcting the image from the alignment beam is described in U.S. Patent No. 4,080,623. A technique for solid-state cameras using 2D CCD arrays which detect positions of R and B images and offset the R and B images to align with the G image is described in U.S. Patent No. 4,908,720. Other techniques attempt to make local corrections of color mis-registration, such as that described in U.S. Patent No. 4,835,594, wherein a 2D pattern is used to correct for a variety of optic and tube spatial problems. Other correction techniques require camera calibration during the manufacturing process. Another technique is to sense color mis-registration from a live image and correct the registration with a small delay, while storing a history of the dynamic properties of the color mis-registration to aid in real-time correction, as described in U.S. Patent No. 4,500,916.

The prior art for solutions to color mis-registration in output devices, such as printers and displays, include solely mechanical designs to prevent mis-registration, such as U.S. Patent No. 5,287,160 for electrophotography applications; U.S. Patent No. 5,040,026 for thermal printers; and those for CRT manufacturing, U.S. Patent Nos. 4,891,548 and 4,139,797, for a shadow mask design; and U.S. Patent No. 4,065,695 for a CRT charge aperture. There is also a technique in the printing art that monitors the output prints with a camera and then mechanically offset the individual plates of the offset printing press, generally with a slight delay in the mass printing process, as described in U.S. Patent Nos. 5,689,425 and 5,412,577. As in the input imaging art, the use of registration marks is common, as described in U.S. Patent Nos. 4,546,700 and 4,018,528, and as described in U.S. Patent No. 5,355,154, wherein a registration pattern is placed outside of the image border. Similarly, U.S. Patent No. 5,170,250, describes a display device that uses an alignment beam. Another approach is to detect and correct the color registration problem solely with image processing techniques, without the use of registration patterns, as described in U.S. Patent No. 4,853,116. Image processing techniques may be applied to either during image capture or the image display.

Imaging systems based on visual opponent color mechanisms are known. One of these incorporates a display using two LCD panels having visual opponent color models, U.S. Patent No. 5,682,180. Another describes a visualization color selection scheme using opponent color models, U.S. Patent No. 5,283,858, while yet another describes a supertwisted nematic liquid crystal cell (STN) device capable of modulating light in accord with opponent color representations of images, U.S. Patent No. 5,550,660. All of these references describe systems having displays, as opposed to scanners, and none address the problems of color registration.

U.S. Patent No. 5,773,814 describes the use of Y and W components interleaved in one one-dimensional array, and G and C components interleaved in another, but does so for the sole purpose of optimizing light correction and maximizing signal-to-noise ratio (SNR) to allow for faster scan times, not to prevent or correct color mis-registration.

Next, a resolution of the captured image is explained.

Scanning resolution is determined by the spacing between two adjacent sensor elements and the optical magnification. In order to achieve high resolution, more sensor elements are used, which results in an increased resolution from the original 75 dpi to 300 dpi and now, in some instances, up to 600 dpi, however, adding more sensor elements is expensive, and other resolution enhancement methods have been explored.

A number of patent references are known which use color multiplexing to improve resolution. Nearly all of those are for 2D video or digital still cameras where color filter arrays (CFA) are used to drive 2D color images from a single 2D CCD sensor. However, because of the inherent difficulty associated with sampling in a 2D arrangement, it is difficult, if not impossible, to implement super sampling of luminance in this type of device.

U.S. Patent No. 4,575,769 to Arnoldi. for *Variable resolution scanning in line scan optical imaging system,* granted March 11, 1986, discloses a method of improving resolution by advancing a document past a horizontal image scanner in defined sequences of half and full steps, half steps causing the document to be fed wise advanced by one four-hundredth of an inch, as in 400 dpi mode, full steps causing the document to be fed wise advanced by one two-hundredth of an inch (as in 200 dpi mode). This technique improves resolution only in the slow scan direction, not the fast scan direction, i.e., parallel to the CCD array.

U.S. Patent No. 4,877,310 to Seachman et al., for *Electronically variable MTF filter for* image *sensor arrays*, granted October 31, 1989, describes placement of a MTF filter between a lens and an imaging array to reduce image modulation to blur the image prior to further processing.

U.S. Patent No. 5,045,932 to Sharman, et. al., for *Method and apparatus for generating a high definition electronic signal from a line scan of a color original,* granted September 3, 1991 describes a motion picture film scanner that generates a high definition television signal from the combination of a high definition luminance component and a plurality of lower definition color components. The color sensors can have large sensor apertures resulting in better signal-to-noise ratio. This system uses four sensor arrays, and is considered to be too complex and too expensive for low cost desktop scanners.

U.S. Patent No. 5, 159,469 to Takagi, for Moire *removing device for image scanner*, granted October 27, 1992, describes a movable filtering mechanism to focus and defocus an image at an array plane.

U.S. Patent No. 5,262,631 to Yamamoto, et al., for Color image reading apparatus, granted November 16, 1993, employs a two-row sensor, one to capture green and the other to capture red and blue with alternative red and blue sensors. The green row is shifted one-half pixel in relation to the red/blue row. This device is a RGB capturing device, and does not have the bandwidth advantage associated with LCC capture.

U.S. Patent No. 5,767,987 to Wolff, et. al., for Method and Apparatus for combining multiple image scans for enhanced resolution, granted June 16, 1998, discloses a method of generating an enhanced resolution image from multiple low resolution images. One of the images is used as a prototype image, which is interpolated to higher resolution. The other images are then registered with the prototype image and the pixel values are changed iteratively based on the images data of the additional images. The technique works because the inherent jitter error of a scanner introduces more sampling points, which may be used to improve resolution. This method requires multiple scans and intensive processing.

U.S. Patent No. 5,773,814 to Phillips, et al., for Sensor assembly providing gray scale and color for an optical image scanner, granted June 30, 1998, uses Y and W interleaved on one ID array and G and C on another. The stated purpose of this technique is to optimize light collection and maximize SNR to allow for faster scan times, not to improve the image resolution. There is no shift, or misalignment, between sensor arrays.

All these prior art approaches address the resolution problem differently. Most of them do not take advantage of the human color vision, where chrominance bandwidth is significantly less than that of luminance, or used the properties of the HVS as a way of reducing bandwidth, instead of enhancing resolution.

All of the known techniques set forth to solve color registration problems either attempt to mechanically prevent the problem or correct the image after the fact. None take an approach wherein the image is captured in a color domain, where the registration is substantially less visible, by taking into account knowledge of the spatial properties of the human color visual system. Further, all of the known references that attempt to use properties of the human visual system address problems other than color registration in a scanner.

US 4,896,207 relates to color video recording and representation and particularly to apparatus using a single image sensor and a single, multi-colour filter array according to the preamble of claim 3, whilst US 5,737,017 discloses a colour image pickup element having one of four types of colour filters arranged on an element surface.

Further, US4663661 discloses a single sensor video camera generating colour difference signals based on pixel rows.

### SUMMARY OF THE INVENTION

It is desirable to provide an image capturing method and an image capturing system wherein luminance and chrominance are captured separately and independently, which offers a captured image which is as sharp as an original image and is free from color fringing and blurring associated with mis-registration.

According to a first aspect of the present invention there is provided a method for colour registration as claimed in claim 1.

According to the described method, the luminance component and two chrominance components (obtained by complexing a color component and a luminance component of the image) are captured separately and independently.

Namely, the luminance component of the image is captured at first resolution by the row of pixel capturing elements for capturing luminance components. On the other hand, a chrominance signal as the first color-luminance color difference signal captures by pixel capturing elements of another row the first color component in alternate columns (pixels) of the image at one-half the first resolution and captures the luminance component for the remaining pixels. Similarly, a chrominance signal as the second color-luminance color difference signal captures by pixel capturing elements of another row the first color component in alternate columns (pixels) of the image at one-half the first resolution and captures the luminance component for the remaining columns (pixels).

As described, pixel capturing elements for capturing the first color component and the luminance component are aligned in the same row, and pixel capturing elements for capturing the second color component and the luminance component are aligned in the same row. With this structure, when capturing a black-and- white image (character) with B/W edges, no registration error occurs between the color component and the luminance component on the same row, thereby eliminating the false color signal around B/W edges associated with the conventional arrangement. As a result, the image capturing method of the present invention offers a captured image which is as sharp as original image without color fringing and blurring associated with mis-registration.

Here, it is needless to mention that the third color component (for example, green (G) component) is obtained from the first and second color components.

The described image capturing method of the present invention utilizes the properties of human color visual system (HVS) which is sensitive to luminance and not sensitive to chrominance. Therefore, when the third color component (for example, green component) is obtained from the first and second color components, a degrading of an image quality would not be noticeable.

According to a second aspect of the present invention there is provided an image capturing system as claimed in claim 3.

According to the described image capturing system, the luminance component and two chrominance components (obtained by complexing a color component and a luminance component of the image) are captured separately and independently.

Namely, the luminance component of the image is captured at first resolution by the row of pixel capturing elements for capturing luminance components. On the other hand, a chrominance signal as the first color-luminance output signal captures by pixel capturing elements of another row the first color component in alternate columns (pixels) of the image at one-half the first resolution and captures the luminance component for the remaining pixels. Similarly, a chrominance signal as the second color-luminance output signal captures by pixel capturing elements of another row the first color component in alternate columns (pixels) of the image at one-half the first resolution and captures the luminance component for the remaining columns (pixels).

As described, pixel capturing elements for capturing the first color component and the luminance component are aligned in the same row, and pixel capturing elements for capturing the second color component and the luminance component are aligned in the same row. With this structure, when capturing a black-and- white image (character) with B/W edges, no registration error occurs between the color component and the luminance component on the same row, thereby eliminating the false color signal around B/W edges associated with the conventional arrangement. As a result, the image capturing method of the present invention offers a captured image which is as sharp as original image without color fringing and blurring associated with mis-registration.

Here, it is needless to mention that the third color component (for example, green (G) component) is obtained from the first and second color components.

The described image capturing system of the present invention utilizes the properties of human color visual system (HVS) which is sensitive to luminance and not sensitive to chrominance. Therefore, when the third color component (for example, green component) is obtained from the first and second color components, a degrading of an image quality would not be noticeable.

The improved treatment method, as well as the construction and mode of operation of the improved treatment apparatus, will, however, be best understood upon perusal of the following detailed description of certain specific embodiments when read in conjunction with the accompanying drawings.

### BRIEF DESCRIPTION OF THE DRAWINGS

Fig. 1 depicts a false color signal in a black-and- white image due to mis-registration in a R-Y-B based camera.
Fig. 2 depicts a sensor arrangement of an embodiment of the invention on a CCD focal plane.
Fig. 3 illustrates the algorithm used to derive registration-insensitive color image from captured RY, Y and BY signals.
Fig. 4 depicts color registration in a RY-Y-BY based scanner.
Fig. 5 depicts application of an embodiment method of the invention to a 2D camera.
Fig. 6 depicts the sensor array of an embodiment of the invention.
Fig. 7 is a block diagram of the method of the invention used to derive a high resolution color image from the sensor array of Fig. 6.
Fig. 8 shows the results of a simulation of the R-Y-B capturing system of an embodiment of the invention in a color scanning system.
Fig. 9 depicts a convention scanning sensor array.

### DESCRIPTION OF THE EMBODIMENTS

### [EMBODIMENT 1]

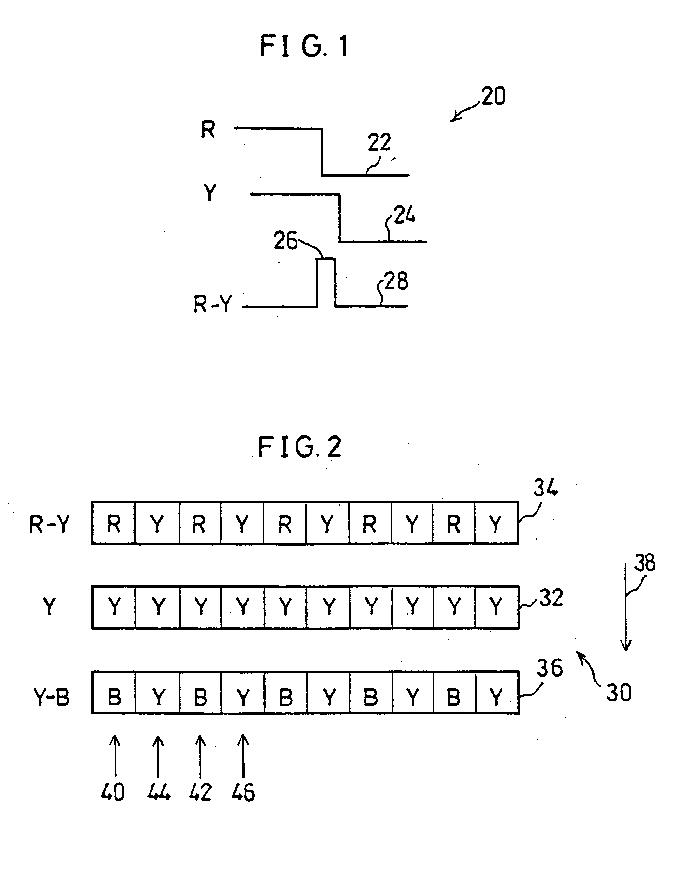

The following descriptions will explain one embodiment of the present invention in reference to Fig. 1 to Fig. 5.

Scanning systems typically incorporate charge-coupled devices (CCD) having a grid of imaging elements, or sensors, therein. Each imaging element detects a specific portion, or component, of an image, and are typically arranged such that a single row or column of elements detects a specific image color component. Due to the 3-row CCD capturing process, there is always registration error between the rows of sensor. The goal of this invention is to capture luminance and chrominance separately and independently, so that the captured image is free from color fringing and blurring associated with mis-registration.

The approach of this embodiment is to capture the image in a color domain where the registration is substantially less visible by taking into account knowledge of the spatial properties of the color visual system. By taking advantage of the lower bandwidth of human visual system to chrominance signals, this approach increases the tolerance for registration error. Even though this application is intended for use in scanners using three one-dimensional sensors, the embodiment may be used in many different types of imaging applications.

A red-luminance-blue (RYB) image capture system and method of using the same, reduces artifacts during color registration, by capturing color images as directly as possible in an opponent color domain. RYB color filters were suggested for use in full-frame, or full-field, capture in video over thirty years ago, by Hunt, described above. Hunt's technique, however, has not been applied to scanners nor to modern video. Unlike Hunt, the embodiment described herein uses R, Y and B filters to cover the sensor pixels, but solely as a way of forming Y, R-Y, and B-Y images. The combination of the R and Y, as well as the B and Y to form the difference images may be done on the sensor prior art to the A/D step, thus rendering the sensor as a virtual Y, R-Y, and B-Y sensor.

A key feature of the present embodiment is the use of color interleaving with three one-D sensors aligned in a sub-scanning direction, wherein one sensor row having capturing elements for capturing only the luminance, Y, one sensor row having sensors for capturing R interleaved with sensors for capturing Y components in the main scanning direction, and the third sensor captures having sensors for capturing B interleaved with sensors for capturing Y components in the main scanning direction.

The physiological basis for the invention is the property of the human visual system (HVS) that derives from opponent color mechanisms within the neurophysiology of the HVS. The main properties that arise from the opponent color mechanisms are the differences in bandwidth and sensitivity for the visual systems spatial frequency behavior, as measured in the contrast sensitivity functions (CSF), where the luminance channel has the highest bandwidth and sensitivity, and the RG bandwidth and sensitivity are about 1/2 that of the luminance and the BY properties are even further diminished.

Fig. 1 illustrates color fringing in RYB camera for a B/W edge, generally at 20. A registration shift between R channel 22 and Y channel 24 causes a false color edge 26 in the RY chrominance channel 28. According to the conventional method wherein a color component (R channel 22) and a luminance component (Y channel 24) are captured by different 1D sensors respectively, and a chrominance signal (color difference signal) R-Y is generated from the difference between the signals as read, when capturing a black-and-while image with B/W edges, registration error would occur due to displacement between sensors, resulting in a false color edge 26. Accordingly, the key to reducing color registration error is to capture the luminance signal and chrominance signal independently.

This can be accomplished with the sensor arrangement shown in Fig. 2, generally at 30. Instead of capturing R and B at the same resolution as luminance, the R and B components are captured at half of the luminance resolution in the fast scan direction. This is based on properties of the HVS, and specifically, of the HVS visual frequency sensitivity for RG, RY and BY isoluminant signals, where the bandwidth of these isoluminant signals is less than 1/2 that of the luminance. One approach may be to increase the pixel size for the R and B rows, however, in the preferred embodiment, the same pixel size is maintained as for the Y row, and Y sensors are inserted between R and B sensors.

Multiple rows of pixel-capturing elements, or sensors, and multiple columns of sensors are arranged in a sensor array, which, in the preferred embodiment, is depicted at 30. A center, or first, row 32 captures only luminance components of the image at a predetermined, or first resolution (full resolution), forming a luminance output signal. Another row 34 captures a first color component (for example, red color component) at one-half the first resolution, but only in alternate columns 40, 42 (pixels) of the row. The remaining columns of sensors 44, 46, etc., in the row capture a luminance component, forming, in this example, a RY chrominance output signal (first color-luminance output signal). The remaining row, 36 captures a second color component (for example, blue component), also at one-half the first resolution, in columns 40, 42, and a luminance component is captured in the remaining columns 44, 46 of the rows, forming a BY chrominance signal (second color-luminance output signal). In this embodiment, the sensors have a slow-scan direction represented by arrow 38. The chrominance signal RY and BY is only derived from the sensor response on the same row. Because there is no registration error between R and Y on the same row beside the fixed shift in the fast scan direction, the false color signal around B/W edges is eliminated.

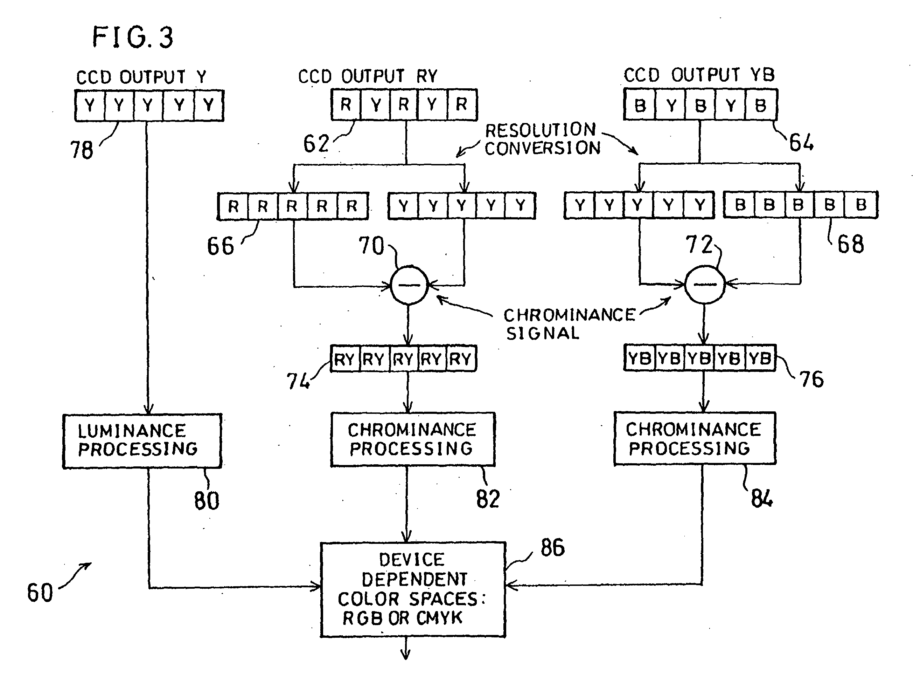

Fig. 3 illustrates the process and processing mechanism used to derive registration-intensitive color image from captured RY, Y and BY signals, generally at 60. The half resolution RY signal 62, and half resolution BY signal 64 from sensor rows 34, 36, respectively, are first resolution enhanced to full resolution using linear interpolation mechanisms (processing mechanisms) 66, 68, respectively. The full resolution interpolated R and Y, or Y and B signals are sent to the color difference operators 70, 72, to derive the RY full resolution chrominance signals 74, and the BY full resolution chrominance signal 76. Output 78 from the sensor row 32 is processed, block 80, as are chrominance signals 74, 76, blocks 82, 84, respectively. Alternately, a half-resolution chrominance signal may be an input to other parts of an imaging system, such as in a compression scheme that uses sub-sampled color differencing images.

The luminance-chrominance-chrominance (LCC) signals are converted by an output mechanism 86 to RGB for display or CMYK for printing. In most cases, image processing such as filtering, tone scale enhancement, etc., are applied to the LCC image before it is displayed or printed, after output mechanism 86 processing.

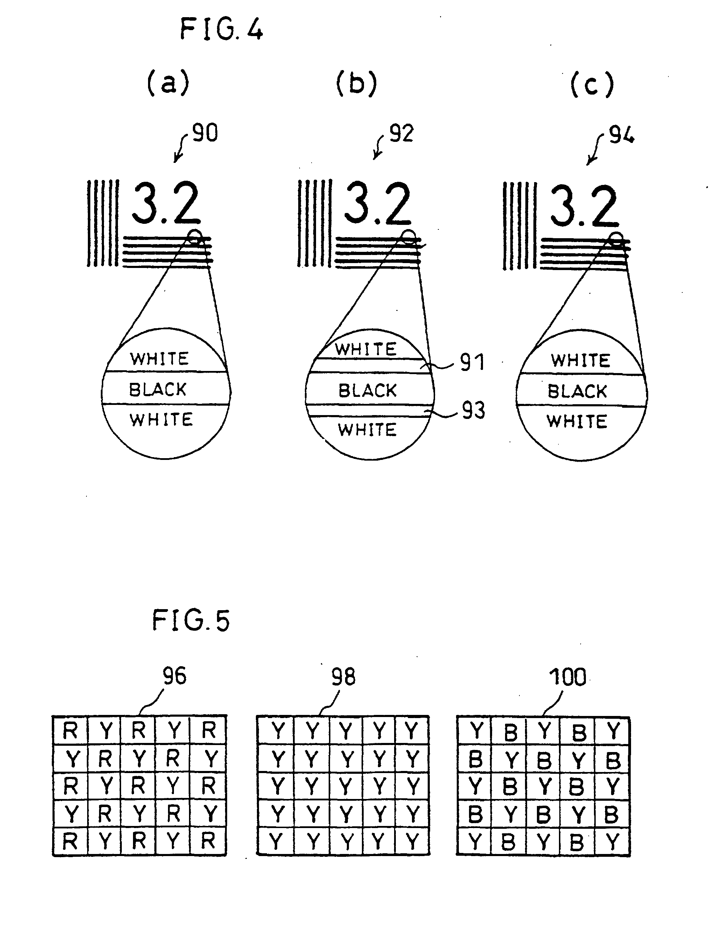

Fig. 4 shows the simulated results using the RY-Y-BY sensor design and method of the invention. Fig. 4(a) is an original image 90, Fig. 4(b) represents a two pixel shift vertically in a green component in green in a RGB scanner 92, and Fig. 4(c) represents a two-pixel shift in luminance in RYB scanner using preferred embodiment 94. The color fringing is eliminated for black text, and the text is as sharp as the original in Fig. 4(c). Color fringing, however, remains visible in Fig. 4(b), wherein an upper fringe 91 is a magenta artifact and a lower fringe 93 is a green artifact.

Referring now to Fig. 5, it is possible to use other color filters to capture the chrominance signal; e.g., one can use RG instead of RY and GB instead of BY. This method can also be applied to reduce the color registration effect 2D cameras using three CCDs. It is possible that one CCD 96 is used to capture red and luminance, another CCD 98 is used to capture luminance at the full resolution, and the third CCD 100 is used to capture luminance and blue.

Thus a system and method to reduce color artifacts has been disclosed, along with a variation thereof.

### [EMBODIMENT 2]

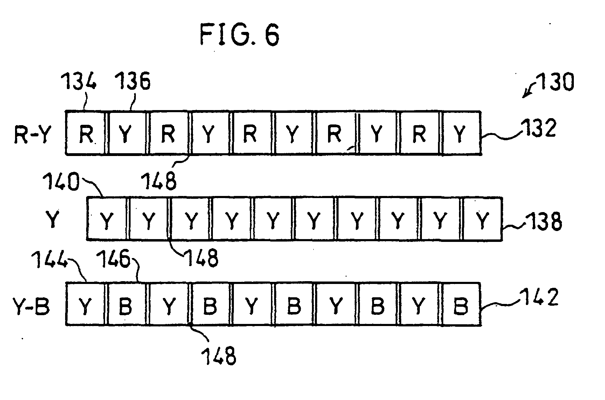

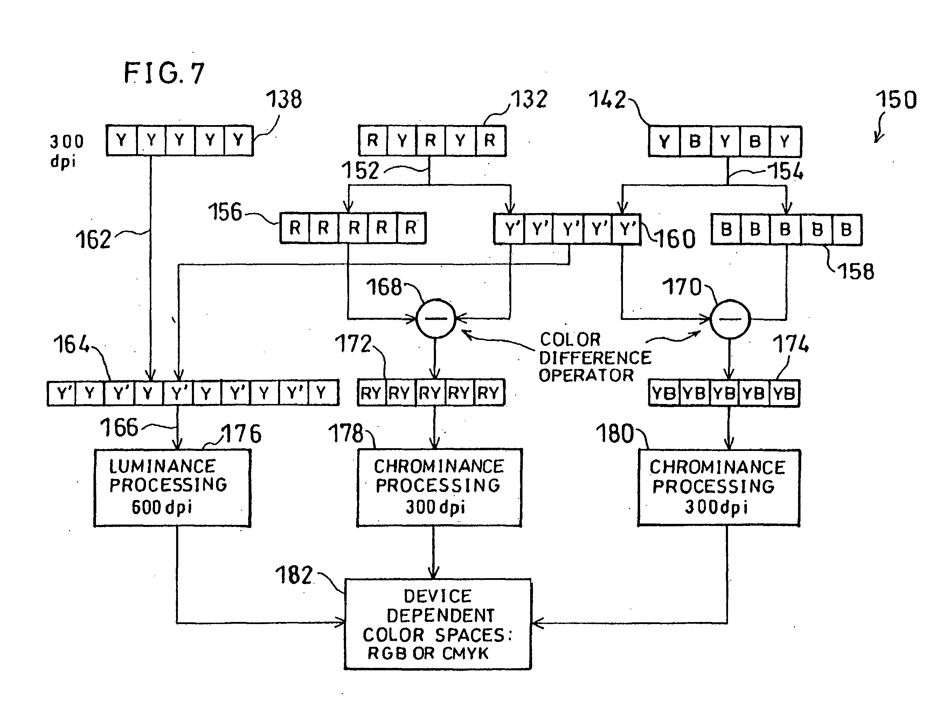

The following descriptions will explain another embodiment of the present invention in reference Fig. 6 and Fig. 7.

The embodiment discloses a method and system to reduce sampling redundancy of prior art RGB scanners by capturing color images in an opponent space luminance-chrominance-chrominance (LCC), where a greater number of sensor elements are used to capture luminance information than are used to capture chrominance information. The embodiment uses a three-row, 300 dpi charge coupled device (CCD) array to capture luminance at a 600 dpi resolution. This increased resolution improves scanned text quality, and reduces aliasing generally caused by insufficient sampling. The advantages of this method over capturing RGB at 600 dpi are (1) a scanner may operate at a lower data rate, thus reducing storage and bandwidth requirements; (2) A scanner incorporating the present embodiment will produce less aliasing because effective sensor aperture is larger than the sampling interval, whereas convention, prior art RGB scanners always have an aperture which is smaller than the sampling interval; (3) the scanner has a higher signal - to-noise ratio because of the larger aperture, i.e., 300 dpi pitch vs. 600 dpi pitch; (4) the scanner has a higher scanning speed because of the lower data rate and the higher signal-to-noise ratio; (5) the scanner more closely approximates the human visual system, wherein the chrominance bandwidth is lower than luminance bandwidth; and (6) the scanner requires less complex processing than prior art monochrome or color scanners.

A sensor array of the embodiment is shown rather schematically, in Fig. 6, generally at 130. Sensor array 130 is arranged into, in the preferred embodiment, three rows of sensors, also referred to herein as sensor elements or pixel capturing elements. The sensor elements in the three rows define multiple columns of sensor elements. Each sensor element detects a single pixel of an image. A first row 132 includes alternate, or interleaved, red (R) sensors 134 and luminance (Y) sensors 136, arranged in a RYRYRY ... order in a main scanning direction. Red sensor elements are referred to herein as first color component sensor elements, which sense a first color component at one-half full resolution. The Y sensor elements in first row 132 are referred to herein as first luminance component sensors which sense a first luminance component at one-half full resolution. In the case where the sensor is designed to operate at 300 dpi, each row will contain 300 sensor elements per inch. A second row 138 includes sensors aligned in the main scanning direction that are all Y sensors 140, which are shifted one-half pitch, i.e., one-half pixel width, in relation to the first and third rows. Luminance sensor elements in the second row 138 are referred to as second luminance component sensors which sense a second, full resolution, luminance component.

A third row 142 includes interleaved Y sensors 144 and B (blue) sensors 146 in the main scanning direction, which are aligned with the sensors in the first row 132, and are arranged in a YBYBYB ... order. Blue sensor elements in third row 142 are referred to herein as second color component sensors which sense a second color component at one-half full resolution. The Y sensor elements in third row 142 are referred to herein as third luminance component sensors which sense a third luminance component at one-half full resolution. The Y sensors in the first row 132 (RY) or third row 142 (YB) are aligned to fill in a gap 148 in the second row 138, which about a tenth of pixel, between the two neighboring Y sensors in the second row (Y), which, in effect, doubles the sampling resolution of luminance. Gap 148 is a result of manufacturing techniques, which require that there be some space between individual sensors. Gap 148 is very small, but exists in prior art sensors and in the sensor of the embodiment. Note that the first row 132 first color component sensor (R) 134 is aligned with the third row 142 third luminance component sensor 144, and that the second color component sensor elements of the third row 142 are aligned with the first luminance component sensor element 136. Because the sampling interval is smaller than the sensor aperture, i.e., the active area of a detector, aliasing caused by insufficient sampling can be greatly reduced.

Fig. 7 illustrates the method of an embodiment of the present invention, shown generally at 150, which is used to derive super resolution (600 dpi) luminance image from captured 300 dpi RY, Y, and YB signals. A half resolution RY signal 152 and a half resolution YB signal 154 are first resolution enhanced to a full resolution R signal 156 and a full resolution B signal 158 using linear interpolation, or other interpolation techniques. The Y component from RY signal 152 and the, Y component from YB signal 154 forms a full resolution Y' signal 160 at 300 dpi. A full resolution Y signal 162 is generated by the second row 138. The difference between Y and Y' is that Y' is offset by a one-half pixel. By combining Y and Y', a super resolution luminance signal 164 is obtained, which is convertible into a super resolution luminance image 166. Full resolution interpolated R signal 156 and B signal 158 are sent to color difference operators 168 and 170, respectively, to derive a R-Y' chrominance signal 172 and a Y-B chrominance signal 174. The luminance-chrominance-chrominance (LCC) signals may then be converted to RGB by, respectively, luminance processor 176 and chrominance processors 178, 180 for display or CMYK for printing (output mechanism 182). As to printing, CMY may be used instead of CMYK. In most cases, image processing such as filtering, tone scale enhancement, etc., are applied to the LCC image before it is displayed or printed. Although Y is referred to as luminance in this disclosure, it may be green, or yellow, or even white.

To prevent chrominance aliasing caused by undersampling of R and B, a color anti-aliasing filter, as described by J.E. Greivenkamp, in *Color dependent optical prefilter for the suppression of aliasing artifacts*, Applied Optics, Vol. 29, pp 676-684, February 10, 1990, may be inserted into the optical path, which will blur only long and short wavelength light, but will not blur the mid wavelength light. This will also blur the luminance, however, not as much as the chrominance channels.

Thus, a scanner system and method have been described which uses color interleaving with three one-dimensional sensors rows, where one sensor captures only the luminance (Y), and the other two sensor rows have red interleaved with Y, or blue interleaved with Y, and wherein the Y sensor is shifted half pixel in relation to the R/Y and Y/B sensor rows. The embodiment uses color multiplexing to improve resolution.

The method and apparatus of the embodiment of the invention may be applied to CCD sensors for scanner, copier, and facsimile applications, and may also be applied to CMOS and other light-sensitive sensors which are used for scanning color images.

As described a first image capturing method of the present invention is arranged so as to include the steps of: arranging multiple rows and multiple columns of pixel capturing elements in a sensor array; capturing a luminance component of the image at a first resolution and generating a luminance output signal therefrom; capturing in another row and in alternate columns thereof, a first color component at one-half the first resolution, capturing a luminance component in the remaining columns thereof, and generating a first color-luminance color difference signal therefrom; and capturing, in another row and in alternate columns thereof, a second color component at one-half the first resolution, capturing a luminance component in the remaining columns thereof, and generating a second color-luminance color difference signal therefrom.

According to the described method, the luminance component and two chrominance components (obtained by complexing a color component and a luminance component of the image) and chrominance are captured separately and independently (complexing color components and luminance components of the image).

Namely, the luminance component of the image is captured at first resolution by the row of pixel capturing elements for capturing luminance components. On the other hand, a chrominance signal as the first color-luminance output signal captures by pixel capturing elements of another row the first color component in alternate columns (pixels) of the image at one-half the first resolution and captures the luminance component for the remaining pixels. Similarly, a chrominance signal as the second color-luminance output signal captures by pixel capturing elements of another row the first color component in alternate columns (pixels) of the image at one-half the first resolution and captures the luminance component for the remaining columns (pixels).

As described, pixel capturing elements for capturing the first color component and the luminance component are aligned in the same row, and pixel capturing elements for capturing the second color component and the luminance component are aligned in the same row. With this structure, when capturing a black-and- white image (character) with B/W edges, no registration error occurs between the color component and the luminance component on the same row, thereby eliminating the false color signal around B/W edges associated with the conventional arrangement. As a result, the image capturing method of the present embodiment offers a captured image which is as sharp as original image without color fringing and blurring associated with mis-registration.

Here, it is needless to mention that the third color component (for example, green (G) component) is obtained from the first and second color components.

The described embodiment image capturing method of the present invention utilizes the properties of human color visual system (HVS) which is sensitive to luminance and not sensitive to chrominance. Therefore, when the third color component (for example, green component) is obtained from the first and second color components, a degrading of an image quality would not be noticeable.

The second embodiment image capturing method of the present invention is arranged so as to further include the step of: converting the first and second color-luminance signals to full resolution; output processing all of the full resolution signals to form an output signal.

According to the described arrangement, the first and second color-luminance color difference signals are enhanced to full resolution (first resolution) signal before being output processed, thereby obtaining a high quality output.

As described, a first image capturing system is arranged so as to include: a sensor array having multiple rows and multiple columns of pixel capturing elements therein, wherein alternate rows have pixel capturing elements for capturing a first resolution luminance component of the image; another row and alternate columns thereof have pixel capturing elements for capturing a first color component (for example, red (R) component) at one-half the first resolution, and which contain pixel capturing elements in the remaining columns thereof for capturing a luminance component thereof; and another row and alternate columns thereof have pixel capturing elements for capturing a half resolution second color component (for example, blue (B) component) at one-half the first resolution, and which contain pixel capturing elements in the remaining columns thereof for capturing a luminance component thereof.

As described for the image capturing method *supra,* according to the described image capturing system, the luminance component and two chrominance components (obtained by complexing a color component and a luminance component of the image) are captured separately and independently.

Namely, the luminance component of the image is captured at first resolution by the row of pixel capturing elements for capturing luminance components. On the other hand, a chrominance signal as the first color-luminance output signal captures by pixel capturing elements of another row the first color component in alternate columns (pixels) of the image at one-half the first resolution and captures the luminance component for the remaining pixels. Similarly, a chrominance signal as the second color-luminance output signal captures by pixel capturing elements of another row the first color component in alternate columns (pixels) of the image at one-half the first resolution and captures the luminance component for the remaining columns (pixels).

As described, pixel capturing elements for capturing the first color component and the luminance component are aligned in the same row, and pixel capturing elements for capturing the second color component and the luminance component are aligned in the same row. With this structure, when capturing a black-and- white image (character) with B/W edges, no registration error occurs between the color component and the luminance component on the same row, thereby eliminating the false color signal around B/W edges associated with the conventional arrangement. As a result, the image capturing method of the present invention offers a captured image which is as sharp as original image without color fringing and blurring associated with mis-registration.

Here, it is needless to mention that the third color component (for example, green (G) component) is obtained from the first and second color components.

The described image capturing system of the present invention utilizes the properties of human color visual system (HVS) which is sensitive to luminance and not sensitive to chrominance. Therefore, when the third color component (for example, green component) is obtained from the first and second color components, a degrading of an image quality would not be noticeable.

The second image capturing system of the present embodiment is arranged so as to further include: processing mechanism for transforming the half resolution first and second color components into full resolution color components.

With this arrangement, the first and second color components are enhanced to full resolution (first resolution), thereby obtaining a high quality read image.

The third embodiment image capturing method of the present invention for super-resolution scanning, is arranged so as to include the steps of: capturing a first color component (for example, red component) of the image at one-half of a full resolution (for example, 300 dpi), capturing a first luminance component at one-half of the full resolution, and generating a first color-luminance color difference signal therefrom; capturing a second luminance component of the image at the full resolution and generating a luminance output signal therefrom; capturing a second color component (for example, blue component) of the image at one-half the full resolution, capturing a third luminance component of the image at one-half the full resolution, and generating a second color-luminance color difference signal therefrom; converting the first and third luminance components of the first and second color-luminance output signals and the second luminance component signal to a luminance component signal of two times full resolution (for example, 600 dpi); and processing the full resolution output signals and the two times full resolution output signal to form a combined output signal.

According to the described third method, the luminance component and two chrominance components (obtained by complexing a color component and a luminance component of the image) are captured in the similar way to the method described earlier.

The difference from the above-mentioned image capturing method lies in that the first and third luminance components of the first and second color-luminance color difference signals and the second luminance component signal are converted to a luminance component signal of two times the full resolution. Further, a complex output signal is generated from the first and second color-luminance color difference signals and the luminance component signal of two times the full resolution, thereby realizing a super-resolution image capturing, which offers an additional effect of improving quality of an image as read.

Here, it is needless to mention that the third color component (for example, green (G) component) is obtained from the first and second color components.

The described system of the present invention utilizes the properties of human color visual system (HVS) which is sensitive to luminance and not sensitive to chrominance. Therefore, when the third color component (for example, green (G) component) is obtained from the first and second color components, a degrading of an image quality would not be noticeable.

The fourth image capturing method of the present invention is arranged so as to further include the steps of: arranging multiple rows and multiple columns of pixel capturing elements in a sensor array to capture an image at a predetermined, full resolution, and wherein the arranging includes offsetting the pixel capturing elements for the row that captures the second luminance component by one-half of a pixel width.

According to the described arrangement, the row for the pixel capturing elements for capturing the second luminance component is offset from other rows for pixel capturing elements by substantially one-half of a pixel width to fill in a predetermined space (gap) of the pixel capturing elements. By arranging so, the sampling interval becomes smaller than the sensor aperture, i.e., the active area of a detector, thereby greatly reducing aliasing caused by insufficient sampling.

The fifth embodiment image capturing method of the present invention for super-resolution scanning, is arranged so as to include the steps of: arranging multiple rows and multiple columns of pixel capturing elements in a sensor array to capture an image at a predetermined, full resolution; capturing, in a first row and in alternate columns thereof, a first color component (for example, red component) of the image at one-half the full resolution (for example, 300 dpi), capturing a first luminance component of the image in the remaining columns of the first row, and generating a first color-luminance output signal therefrom; capturing, in a second row, a second luminance component of the image at the full resolution and generating a second luminance component output signal therefrom, wherein the arranging, for the second row, includes offsetting the pixel capturing elements by one-half of a pixel width; capturing, in a third row and in alternate columns thereof, a second color component (for example, blue component) of the image at one-half the full resolution, capturing a third luminance component of the image in the remaining columns thereof, and generating a second color-luminance output signal therefrom; and converting the first and second color-luminance signals to full resolution first and second color component signals; converting the first and second color-luminance signals to a full resolution luminance component signal and combining the full resolution luminance component signal with the second luminance component output signal to form a two times full resolution (for example, 600 dpi) luminance output signal; and output processing full resolution signals color component output signals and the two times full resolution luminance output signal to form a combined output signal.

According to the above arrangement, a luminance component and two chrominance components (combining color components and a luminance component of the image) are obtained in the manner of the aforementioned image capturing method of the present invention.

The difference from the above-mentioned image capturing method lies in that the first and third luminance components of the first and second color-luminance output signals and the second luminance component signal are converted to a luminance component signal of two times the full resolution. Further, a complex output signal is generated from the first and second color-luminance output signals and the luminance component signal of two times full resolution, thereby realizing a super-resolution image capturing.

Here, it is needless to mention that the third color component (for example, green (G) component) is obtained from the first and second color components.

The described system of the present invention utilizes the properties of human color visual system (HVS) which is sensitive to luminance and not sensitive to chrominance. Therefore, when the third color component (for example, green (G) component) is obtained from the first and second color components, a degrading of an image quality would not be noticeable.

The sixth image capturing method is further arranged such that: the processing includes the step of processing the combined output signal to form a RGB output signal.

As a result, an output of a color space (RGB) suited for an output device for displaying an image can be obtained.

The seventh image capturing method is further arranged such that: the processing includes the step of processing the combined output signal to form a CMYK output signal.

As a result, an output of a color space (CMYK) suited for an output device for displaying an image can be obtained.

The eighth image capturing method is further arranged such that the processing includes the step of processing the combined output signal to form a CMY output signal.

As a result, an output of a color space (CMY) suited for an output device for displaying an image can be obtained.

The third image capturing system for super-resolution scanning which includes a sensor array having multiple rows and multiple columns of pixel capturing elements therein, is arranged so as to include: a first row having first color pixel capturing elements for capturing a first color component of the image at one-half of a full resolution, which alternate with first luminance pixel capturing elements for capturing a first luminance component of the image at one-half of a full resolution; a second row having second luminance pixel capturing elements for capturing a full resolution, second luminance component of the image, wherein the second luminance pixel capturing elements are offset from pixel capturing elements in the first and third rows by one-half pixel width; and a third row having second color pixel capturing elements for capturing a second color component of the image at one-half of a full resolution, which alternate with third luminance pixel capturing elements for capturing a third luminance component of the image at one-half of a full resolution, wherein the first color pixel capturing element are aligned with the third luminance pixel capturing elements.

According to the above arrangement, a luminance component and two chrominance components (combining color components and a luminance component of the image) are obtained in the manner of the aforementioned image capturing method of the present invention.

As described, pixel capturing elements for capturing the first color component and the luminance component are aligned in the same row, and pixel capturing elements for capturing the second color component and the luminance component are aligned in the same row. With this structure, when capturing a black-and-while image with B/W edges, no registration error occurs between the color component and the luminance component on the same row, thereby eliminating the false color signal around B/W edges associated with the conventional arrangement, thereby realizing a captured image which is as sharp as original image without color fringing and blurring associated with mis-registration.

According to the described arrangement, the row for the pixel capturing elements for capturing the second luminance component is offset from other rows for pixel capturing elements by substantially one-half of a pixel width to fill in a predetermined space (gap) of the pixel capturing elements. By arranging so, the sampling interval becomes smaller than the sensor aperture, i.e., the active area of a detector, thereby greatly reducing aliasing caused by insufficient sampling.

Here, it is needless to mention that the third color component (for example, green (G) component) is obtained from the first and second color components.

The described embodiment system of the present invention utilizes the properties of human color visual system (HVS) which is sensitive to luminance and not sensitive to chrominance. Therefore, when the third color component (for example, green (G) component) is obtained from the first and second color components, a degrading of an image quality would not be noticeable.

The fourth embodiment image capturing system of the present invention is arranged so as to further include: a processing mechanism for transforming the half resolution first and second color components into full resolution color components and for transforming the first, second and third luminance components into a two times full resolution luminance components.

As described, by converting the first and second color components to color components of full resolution and converting the first through third luminance components to luminance component of two times full resolution, a high quality super resolution image reading can be realized.

The fifth image capturing system is arranged so as to further include: an output mechanism for providing a RGB output.

As a result, an output of a color space (RGB) suited for an output device for displaying an image can be obtained.

The sixth image capturing system is arranged so as to further include: an output mechanism for providing a CMYK output.

As a result, an output of a color space (CMYK) suited for an output device for displaying an image can be obtained.

The seventh image capturing system is arranged so as to further include: an output mechanism for providing a CMY output.

As a result, an output of a color space (CMY) suited for an output device for displaying an image can be obtained.

## Claims

1. An image capturing method, comprising the steps of:
arranging multiple rows and multiple columns of pixel capturing elements in a sensor array (30);
capturing, in the fast scan direction, a luminance component of the image at a first resolution in a row and generating a luminance output signal therefrom;
capturing, in the fast scan direction, in another row and in alternate columns thereof, a first color component at one-half the first resolution, capturing a luminance component in the remaining columns thereof, and generating a first color-luminance color difference signal therefrom; and
capturing, in the fast scan direction, in another row and in alternate columns thereof, a second color component at one-half the first resolution, capturing a luminance component in the remaining columns thereof, and generating a second color-luminance color difference signal therefrom.

2. The image capturing method of claim 1, **characterized by** further comprising the step of:
converting the first and second color-luminance color difference signals to the first resolution; output processing all of the first resolution signals to form an output signal.

3. An image capturing system comprising:
a sensor array (30) having multiple rows and multiple columns of pixel capturing elements therein, wherein first alternately disposed rows (32) have pixel capturing elements for capturing a first resolution luminance component of the image in the fast scan direction; second rows (34) have pixel capturing elements in alternate columns for capturing, in the fast scan direction, a first color component at one-half the first resolution, and which contain pixel capturing elements in the remaining columns thereof for capturing a luminance component thereof; and third rows (36) have pixel capturing elements for capturing in alternate columns, in the fast scan direction, a half resolution second color component at one-half the first resolution and which contain pixel capturing elements in the remaining columns thereof for capturing a luminance component thereof **characterized in that** the system further comprises means for generating a first color-luminance color difference signal from the first color component and the luminance component on the same second row and means for generating the second color-luminance color difference signal from the second color component and the luminance component on the same third row.

4. The image capturing system of claim 3, **characterized by** further comprising:
processing mechanism (66, 68) for transforming the half resolution first and second color components into the first resolution color components.

5. The image capturing method of claim 1 for super-resolution scanning, comprising:
converting the luminance components of the first and second color-luminance color difference signals and the luminance component signal captured at first resolution to a luminance component signal of twice the first resolution; and
processing the full resolution output signals and the twice first resolution output signal to form a combined output signal.

6. The image capturing method of claim 5, further comprising the steps of:
arranging multiple rows and multiple columns of pixel capturing elements in a sensor array to capture an image at a predetermined, first resolution, and wherein said arranging includes offsetting the pixel capturing elements for the row that captures the second luminance component by one-half of a pixel width.

7. The image capturing method of claim 1 for super-resolution scanning, comprising:
arranging the sensor array to capture an image at a predetermined, first resolution; wherein the luminance component is captured in a second row (138) at the first resolution and wherein the second row (138), includes offsetting the pixel capturing elements by one-half of a pixel width;
converting the first and second color-luminance signals to first resolution first and second color component signals;
converting the first and second color-luminance signals to a first resolution luminance component signal and combining the first resolution luminance component signal with the second luminance component output signal to form a twice the first resolution luminance output signal; and
output processing first resolution signals color component output signals and the twice the first resolution luminance output signal to form a combined output signal.

8. The image capturing method of claim 2, 5, 6 or 7, **characterized in that**:
said processing includes the steps of processing the combined output signal to form a RGB output signal.

9. The image capturing method of claim 2, 5, 6 or 7, **characterized in that**:
said processing includes the steps of processing the combined output signal to form a CMYK output signal.

10. The image capturing method of claim 2, 5, 6 or 7, **characterized in that**:
said processing includes the steps of processing the combined output signal to form a CMY output signal.

11. An image capturing system as claimed in claim 3 wherein said pixel capturing elements for capturing a first resolution luminance component of the image are offset from pixel capturing elements in the other rows (132, 142) by one-half pixel width.

12. The image capturing system as claimed in claim 11, **characterized by** further comprising:
a processing mechanism (156, 158, 160) for transforming the half resolution first and second color components into full resolution color components and for transforming said first, second and third luminance components into a twice full resolution luminance components.

13. The image capturing system of claim 4 or 12, **characterized by** including an output mechanism (86, 182) for providing a RGB output.

14. The image capturing system of claim 4 or 12, **characterized by** including an output mechanism (86, 182) for providing a CMYK output.

15. The image capturing system of claim 4 or 12, **characterized by** including an output mechanism (182) for providing a CMY output.

## Patentansprüche

1. Bildaufnahmeverfahren, das die folgenden Schritte enthält:
Anordnen mehrerer Zeilen und mehrerer Spalten aus Pixelaufnahmeelementen in einer Sensormatrix (30);
Aufnehmen einer Luminanzkomponente des Bildes in der Schnellabtastrichtung mit einer ersten Auflösung in einer Zeile und hieraus Erzeugen eines Luminanzausgangssignals;
Aufnehmen einer ersten Farbkomponente mit der Hälfte der ersten Auflösung in der Schnellabtastrichtung in einer weiteren Zeile und in abwechselnden Spalten hiervon, Aufnehmen einer Luminanzkomponente in den verbleibenden Spalten hiervon und hieraus Erzeugen eines ersten Farb-Luminanz-Farb-Differenzsignals; und
Aufnehmen einer zweiten Farbkomponente mit der Hälfte der ersten Auflösung in der Schnellabtastrichturrg in einer weiteren Zeile und in abwechselnden Spalten hiervon, Aufnehmen einer Luminanzkomponente in den verbleibenden Spalten hiervon und hieraus Erzeugen eines zweiten Farb-Luminanz-Farb-Differenzsignals.

2. Bildaufnahmeverfahren nach Anspruch 1, **gekennzeichnet durch** den folgenden weiteren Schritt:
Umsetzen des ersten und des zweiten Farb-Luminanz-Farb-Differenzsignals in die erste Auflösung; Verarbeiten aller Signale mit der ersten Auflösung für die Ausgabe, um ein Ausgangssignal zu erzeugen.

3. Bildaufnahmesystem, das enthält;
eine Sensormatrix (30) mit mehreren Zeilen und mehreren Spalten aus Pixelaufnahmeelementen, wobei erste abwechselnd angeordnete Zeilen (32) Pixelaufnahmeelemente zum Aufnehmen einer Luminanzkomponente des Bildes mit einer ersten Auflösung in der Schnellabtastrichtung besitzen; zweite Zeilen (34) Pixelaufnahmeelemente in abwechselnden Spalten besitzen, um in Schnellabtastrichtung eine erste Farbkomponente mit der halben ersten Auflösung aufzunehmen, und Pixelaufnahmeelemente in den verbleibenden Spalten hiervon enthalten, um eine Luminanzkomponente hiervon aufzunehmen; und dritte Zeilen (36) Pixelaufnahmeelemente besitzen, um in abwechselnden Spalten in Schnellabtastrichtung eine zweite Farbkomponente mit halber Auflösung mit halben ersten Auflösung aufzunehmen, und Pixelaufnahmeelemente in den verbleibenden Spalten hiervon enthalten, um eine Luminanzkomponente hiervon aufzunehmen, **dadurch gekennzeichnet, dass** das System ferner Mittel zum Erzeugen eines ersten Farb-Luminanz-Farb-Differenzsignals aus der ersten Farbkomponente und der Luminanzkomponente in derselben zweiten Zeile sowie Mittel zum Erzeugen des zweiten Farb-Luminanz-Farb-Differenzsignals aus der zweiten Farbkomponente und der Luminanzkomponente in derselben dritten Zeile umfasst.

4. Bildaufnahmesystem nach Anspruch 3, ferner **gekennzeichnet durch**:
einen Verarbeitungsmechanismus (66, 68), der die erste und die zweite Farbkomponente mit halber Auflösung in die Farbkomponenten mit der ersten Auflösung transformiert.

5. Bildaufnahmeverfahren nach Anspruch 1 für eine Abtastung mit hoher Auflösung, das enthält:
Umsetzen der Luminanzkomponenten des ersten und des zweiten Farb-Luminanz-Farb-Differenzsignals und des Luminanzkomponentensignals, die mit einer ersten Auflösung aufgenommen worden sind, in ein Luminanzkomponentensignal mit der doppelten ersten Auflösung; und
Verarbeiten der Ausgangssignale mit voller Auflösung und des Ausgangssignals mit der doppelten ersten Auflösung, um ein kombiniertes Ausgangssignal zu bilden.

6. Bildaufnahmeverfahren nach Anspruch 5, das ferner die folgenden Schritte enthält:
Anordnen mehrerer Zeilen und mehrerer Spalten aus Pixelaufnahmeelementen in einer Sensormatrix, um ein Bild mit einer vorgegebenen ersten Auflösung aufzunehmen, wobei dieses Anordnen das Versetzen der Bildaufnahmeelemente für die Zeile, die die zweite Luminanzkomponente aufnimmt, um eine halbe Pixelbreite enthält.

7. Bildaufnahmeverfahren nach Anspruch 1 für eine Abtastung mit hoher Auflösung, das enthält:
Anordnen der Sensormatrix, um ein Bild mit einer vorgegebenen ersten Auflösung aufzunehmen; wobei die Luminanzkomponente in einer zweiten Zeile (138) mit der ersten Auflösung aufgenommen wird und wobei in der zweiten Zeile (138) die Pixelaufnahmeelemente um eine halbe Pixelbreite versetzt sind;
Umsetzen des ersten und des zweiten Farb-Luminanz-Signals in ein erstes bzw. ein zweites Farbkomponentensignal mit der ersten Auflösung;
Umsetzen des ersten und des zweiten Farb-Luminanz-Signals in ein Luminanzkomponentensignal mit der ersten Auflösung und Kombinieren des Luminanzkomponentensignals mit der ersten Auflösung mit dem zweiten Luminanzkomponenten-Ausgangssignal, um ein Luminanzausgangssignal mit der doppelten ersten Auflösung zu erzeugen; und
Verarbeiten von Farbkomponentenausgangssignalen mit der ersten Auflösung und des Luminanzausgangssignals mit der doppelten ersten Auflösung für die Ausgabe, um ein kombiniertes Ausgangssignal zu bilden.

8. Bildaufnahmeverfahren nach Anspruch 2, 5, 6 oder 7, **dadurch gekennzeichnet, dass**:
die Verarbeitung die Schritte des Verarbeitens des kombinierten Ausgangssignals, um ein RGB-Ausgangssignal zu bilden, enthält.

9. Bildaufnahmeverfahren nach Anspruch 2, 5, 6 oder 7, **dadurch gekennzeichnet, dass**:
die Verarbeitung die Schritte des Verarbeitens des kombinierten Ausgangssignals, um ein CMYK-Ausgangssignal zu bilden, enthält.

10. Bildaufnahmeverfahren nach Anspruch 2, 5, 6 oder 7, **dadurch gekennzeichnet, dass**:
die Verarbeitung die Schritte des Verarbeitens des kombinierten Ausgangssignals, um ein CMY-Ausgangssignal zu bilden, enthält.

11. Bildaufnahmesystem nach Anspruch 3, bei dem die Bildaufnahmeelemente zum Aufnehmen einer Luminanzkomponente der ersten Auflösung des Bildes zu Pixelaufnahmeelementen in den anderen Zeilen (132, 142) um eine halbe Pixelbreite versetzt sind.

12. Bildaufnahmesystem nach Anspruch 11, ferner **gekennzeichnet durch**:
einen Verarbeitungsmechanismus (156, 158, 160), der die erste und die zweite Farbkomponente mit halber Auflösung in Farbkomponenten mit voller Auflösung transformiert und die erste, die zweite und die dritte Luminanzkomponente in Luminanzkomponenten mit der doppelten vollen Auflösung transformiert.

13. Bildaufnahmesystem nach Anspruch 4 oder 12, **gekennzeichnet durch** einen Ausgabemechanismus (86, 182), der ein RGB-Ausgangssignal bereitstellt.

14. Bildaufnahmesystem nach Anspruch 4 oder 12, **gekennzeichnet durch** einen Ausgabemechanismus (86, 182), der ein CMYK-Ausgangssignal bereitstellt.

15. Bildaufnahmesystem nach Anspruch 4 oder 12, **gekennzeichnet durch** einen Ausgabemechanismus (182), der ein CMY-Ausgangssignal bereitstellt.

## Revendications

1. Procédé de saisie d'images, comportant les étapes consistant :
à disposer de multiples rangées et de multiples colonnes d'éléments de saisie de pixels dans une matrice de capteurs (30) ;
à saisir, dans la direction de balayage rapide, une composante de luminance de l'image à une première résolution dans une rangée et à générer à partir de celle-ci un signal de sortie de luminance ;
à saisir, dans la direction de balayage rapide, dans une autre rangée et dans des colonnes alternées de celle-ci, une première composante de couleur à la moitié de la première résolution, à saisir une composante de luminance dans les colonnes restantes de celle-ci, et à générer à partir de celles-ci un premier signal de différence de couleur couleur-luminance ; et
à saisir, dans la direction de balayage rapide, dans une autre rangée et dans des colonnes alternées de celle-ci, une seconde composante de couleur à la moitié de la première résolution, à saisir une composante de luminance dans les colonnes restantes de celle-ci, et à générer à partir de celles-ci un second signal de différence de couleur couleur-luminance.

2. Procédé de saisie d'images selon la revendication 1, **caractérisé en ce qu'**il comporte, en outre, l'étape consistant :
à convertir les premier et second signaux de différence de couleur couleur-luminance en la première résolution ; et à effectuer un traitement de sortie de tous les signaux de première résolution pour former un signal de sortie.

3. Système de saisie d'images, comportant :
une matrice (30) comportant de multiples rangées et de multiples colonnes d'éléments de saisie de pixels, dans laquelle de premières rangées (32) disposées de façon alternée comprennent des éléments de saisie de pixels pour saisir une composante de luminance de première résolution de l'image dans la direction de balayage rapide ; de secondes rangées (34) comprennent des éléments de saisie de pixels dans des colonnes alternées pour saisir, dans la direction de balayage rapide, une première composante de couleur à la moitié de la première résolution, et contiennent des éléments de saisie de pixels dans les colonnes restantes de celles-ci pour saisir une composante de luminance de celle-ci ; et de troisièmes rangées (36) comprennent des éléments de saisie de pixels pour saisir dans des colonnes alternées, dans la direction de balayage rapide, une seconde composante de couleur de demi-résolution à la moitié de la première résolution et contiennent des éléments de saisie de pixels dans les colonnes restantes de celles-ci pour saisir une composante de luminance de celle-ci,
**caractérisée en ce que** le système comporte, en outre, des moyens pour générer un premier signal de différence de couleur couleur-luminance à partir de la première composante de couleur et de la composante de luminance sur la même seconde rangée et des moyens pour générer le second signal de différence de couleur couleur-luminance à partir de la seconde composante de couleur et de la composante de luminance sur la même troisième rangée.

4. Système de saisie d'images selon la revendication 3, **caractérisé en ce qu'**il comporte, en outre :
un mécanisme de traitement (66, 68) pour transformer les première et seconde composantes de couleur de demi-résolution en composantes de couleur de première résolution.

5. Procédé de saisie d'images selon la revendication 1 pour le balayage de super-résolution, consistant :
à convertir les composantes de luminance des premier et second signaux de différence de couleur couleur-luminance et le signal de composante de luminance saisi à la première résolution en un signal de composante de luminance de deux fois la première résolution ; et
à traiter les signaux de sortie de pleine résolution et le signal de sortie de deux fois la première résolution pour former un signal de sortie combiné.

6. Procédé de saisie d'images selon la revendication 5, comportant, en outre, les étapes consistant :
à disposer de multiples rangées et de multiples colonnes d'éléments de saisie de pixels dans une matrice de capteurs pour saisir une image à une première résolution prédéterminée, et dans lequel ladite disposition comprend le décalage de la moitié d'une largeur de pixel des éléments de saisie de pixels pour la rangée qui saisit la seconde composante de luminance.

7. Procédé de saisie d'images selon la revendication 1 pour le balayage de super-résolution, consistant :
à disposer la matrice de capteurs pour saisir une image à une première résolution prédéterminée ; dans lequel la composante de luminance est saisie dans une seconde rangée (138) à la première résolution et dans lequel la seconde rangée (138), consiste à décaler de la moitié d'une largeur de pixel les éléments de saisie de pixels ;
à convertir les premier et second signaux couleur-luminance en premier et second signaux de composante de couleur de première résolution ;
à convertir les premier et second signaux couleur-luminance en un premier signal de composante de luminance de première résolution et à combiner ce dernier avec le signal de sortie de seconde composante de luminance pour former un signal de sortie de luminance de deux fois la première résolution ; et
à effectuer un traitement de sortie de signaux de sortie de composante de couleur de première résolution et du signal de sortie de luminance de deux fois la première résolution pour former un signal de sortie combiné.

8. Procédé de saisie d'images selon la revendication 2, 5, 6 ou 7, **caractérisé en ce que** :
ledit traitement comprend les étapes consistant à traiter le signal de sortie combiné pour former un signal de sortie RVB.

9. Procédé de saisie d'image selon la revendication 2, 5, 6 ou 7, **caractérisé en ce que** :
ledit traitement comprend les étapes consistant à traiter le signal de sortie combiné pour former un signal de sortie CMJN.

10. Procédé de saisie d'images selon la revendication 2, 5, 6 ou 7, **caractérisé en ce que** :
ledit traitement comprend les étapes consistant à traiter le signal de sortie combiné pour former un signal de sortie CMJ.

11. Système de saisie d'images selon la revendication 3, dans lequel lesdits éléments de saisie de pixels pour saisir une composante de luminance de première résolution de l'image sont décalés de la moitié de la largeur d'un pixel d'éléments de saisie de pixels des autres rangées (132, 142).

12. Système de saisie d'images selon la revendication 11, **caractérisé en ce qu'**il comporte, en outre :
un mécanisme de traitement (156, 158, 160) pour transformer les première et seconde composantes de couleur de demi-résolution en composantes de couleur de pleine résolution et pour transformer lesdites première, seconde et troisième composantes de luminance en composantes de luminance de deux fois la pleine résolution.

13. Système de saisie d'images selon la revendication 4 ou 12, **caractérisé en ce qu'**il comprend un mécanisme de sortie (86, 182) pour fournir une sortie RVB.

14. Système de saisie d'images selon la revendication 4 ou 12, **caractérisé en ce qu'**il comprend un mécanisme de sortie ( 86, 182) pour fournir une sortie CMJN.

15. Système de saisie d'images selon la revendication 4 ou 12, **caractérisé en ce qu'**il comprend un mécanisme de sortie (182) pour fournir une sortie CMJ.
